# FASCICULE DE BREVET EUROPEEN

(11) **EP 0 893 340 B1**
(45) Date de publication et mention de la délivrance du brevet: **09.06.2004**
(21) Numéro de dépôt: 98401848.1
(22) Date de dépôt: 21.07.1998
(51) Int. Cl.: B64C 1/14

(54) **Kit pour le montage d'un vitrage feuilleté coulissant dans un cockpit d'avion**
Bauteilsatz zum Montieren einer Verbundglas-Schiebescheibe in einer Flugzeugkabine
Kit for mounting a sliding laminated glazing in an aircraft cockpit

(30) Priorité: 23.07.1997 FR 9709348
(43) Date de publication de la demande: 27.01.1999
(73) Titulaire: SAINT-GOBAIN GLASS FRANCE, 92400 Courbevoie (FR)
(72) Inventeur: Demeester, Jean, 45600 Sully sur Loire (FR)
(74) Mandataire: Jolly, Jean-Pierre

(56) Documents cités:
- EP-A- 0 376 192
- FR-A- 1 537 215

## Description

La présente invention concerne un kit pour le montage d'un vitrage feuilleté coulissant, notamment dans un cockpit d'avion.

On connaît par FR 1 537 215 un pare-brise de cockpit d'avion pourvu de deux feuilles de verre et dont la bordure est fixée pincée par un profilé de retenue , lui même fixé au châssis support du cockpit. Le profilé de retenue n'est pas adapté à des vitrages à trois feuilles pourvus d'un rebord périphérique.

Par le brevet n° 2 720 029 déposé par la Demanderesse, on connaît un vitrage feuilleté pour pare-brise de cockpit d'avion comprenant au moins deux feuilles de verre structurales liées entre elles par une couche intercalaire en matière plastique transparente, par exemple en polyvinylbutyral (PVB) ou en polyuréthane.La feuille de verre structurale qui est tournée du côté extérieur à la cabine de pilotage peut être recouverte d'une troisième feuille, en verre trempé ou renforcé chimiquement, par l'intermédiaire d'une autre couche intercalaire en PVB ou en polyuréthane. La troisième feuille et la deuxième couche intercalaire ont des dimensions réduites par rapport à celles des deux feuilles de verre structurales, de manière à former sur celles-ci un rebord périphérique débordant. Ce rebord est reçu dans une feuillure formée à la périphérie d'une baie du cockpit et est maintenu dans la feuillure par pincement au moyen d'un profilé approprié.

L'invention a pour but de perfectionner le profilé de retenue en pincement du rebord d'un tel vitrage et de l'adapter à un vitrage coulissant.

Ce vitrage permet de contenir, en toutes circonstances, la pression différentielle qui existe entre l'intérieur et l'extérieur du cockpit, et de résister aux chocs violents qui peuvent se produire en cours de vol, tels que les impacts d'oiseaux.

La présente invention concerne un vitrage coulissant de cockpit d'avion basé sur le même principe que le précédent et elle concerne plus particulièrement un kit de montage pour fixer ce vitrage à un châssis support d'une baie latérale de cockpit d'avion.

Un vitrage coulissant est généralement fixé sur un châssis métallique en forme de cadre rectangulaire monté coulissant dans la baie. Un mode de montage connu consiste à fixer le vitrage sur le châssis coulissant au moyen de boulons qui traversent le vitrage dans la zone de son rebord périphérique. Toutefois, cette solution n'est pas entièrement satisfaisante car les trous percés pour le passage des boulons fragilisent le vitrage.

De plus, lors de variations de la température extérieure, il peut se produire une concentration de contraintes sur le vitrage, au niveau des boulons, qui sont dus à la dilatation différentielle entre le verre et le châssis.

D'autre part, les vitrages boulonnés sont difficiles à mettre en place car il faut veiller à faire coïncider exactement les trous du vitrage avec ceux du châssis et à rendre étanches les trous de passage des boulons sur le châssis et sur le vitrage.

Dans un autre mode de montage connu, les perçages pour le passage des boulons sont reportés sur une bordure composite se trouvant à la périphérie du vitrage. Cette bordure est constituée d'au moins deux couches de matière plastique comprenant entre elles une couche formée par l'extension de la première couche intercalaire au-delà des deux feuilles de verre structurales. Mais cette solution est complexe et coûteuse, et de plus, elle présente l'inconvénient d'une déformation irrégulière de la bordure à proximité des boulons, ce qui peut occasionner des défauts' d'étanchéité.

La présente invention vise à remédier à ces inconvénients et elle a pour objet un kit pour le montage d'un vitrage d'un cockpit d'avion, conforme à la revendication 1.

Selon l'invention, le vitrage garde son intégrité structurelle puisqu'il n'est pas percé mais seulement pincé sur son bord. De plus, les charges qui s'exercent dans le plan du vitrage et qui sont dues à la différence de dilatation entre le verre et le châssis sont librement transmises jusqu'au bord du vitrage puisqu'aucun boulon ne retient ce bord.

Le remplacement d'un vitrage peut se faire sans précaution particulière étant donné que même si les trous du profilé de retenue ne sont pas en parfaite coïncidence avec ceux du châssis, il n'y a pas de risque que les boulons endommagent le vitrage.

L'invention sera décrite à présent en regard du dessin annexé dans lequel :
la figure 1 est une vue partielle en élévation d'un vitrage latéral coulissant de cockpit d'avion monté sur un châssis ;
la figure 2 est une vue en coupe suivant la ligne II-II de la figure 1, montrant le vitrage, le châssis ainsi que' des éléments servant à assembler le vitrage au châssis ; et
la figure 3 est une vue analogue à la figure 2 mais en vue éclatée.

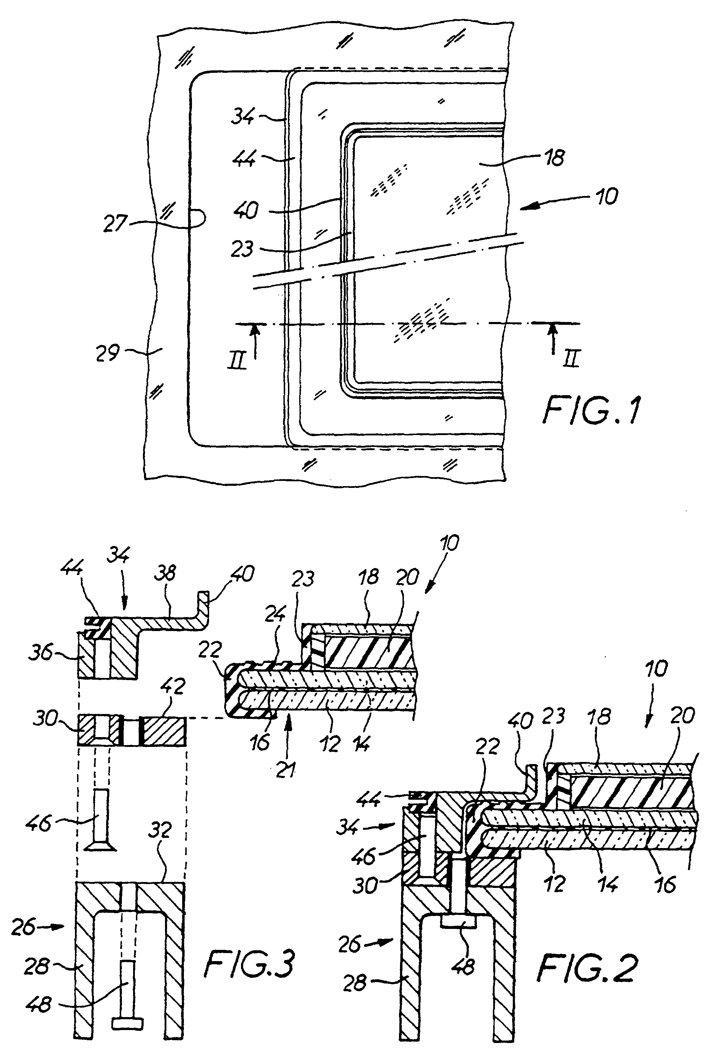

Les figures 1 et 2 représentent un vitrage 10 pour cockpit d'avion, constitué de deux feuilles de verre structurales 12,14, en verre trempé ou renforcé chimiquement, liées entre elles par une couche intercalaire 16 en matière plastique transparente, par exemple en polyvinylbutyral ou en polyuréthane.

La feuille de verre 14 est revêtue d'une troisième couche de verre 18, également en verre trempé ou renforcé chimiquement, qui constitue la face extérieure du vitrage par rapport à la cabine de pilotage. Cette troisième feuille de verre est liée à la feuille de verre structurale 14 par l'intermédiaire d'une seconde couche intercalaire 20 en PVB.

Les dimensions de la troisième couche de verre 18 et de la seconde couche intercalaire 20 sont plus petites que celles des feuilles de verre structurale 12, 14, de sorte qu'il se forme sur celles-ci une bordure périphérique débordante 21. Sur cette bordure s'emboîte un joint en silicone 22 de section en U et qui comporte une aile 23 qui recouvre les chants de la troisième feuille de verre 18 et de la deuxième couche intercalaire 20. Le joint est pourvu sur au moins l'une de ses faces de nervures longitudinales 24 destinées à assurer un bon ancrage du joint dans la feuillure.

Le vitrage 10 est fixé sur un châssis 26 qui est monté coulissant dans une baie 27 du cockpit d'avion 29. La figure 2 montre un exemple de réalisation du châssis, tel qu'on le trouve sur la plupart des avions de ligne et notamment sur l'Airbus A 320, mais il va de soi que le vitrage peut être fixé sur tout autre type de châssis.

Le châssis 26 comprend un profilé 28 de section en U, en forme de cadre rectangulaire de mêmes dimensions que le vitrage, et une couronne plate 30 de mêmes surfaces et section que le profilé 28. La couronne 30 est fixée sur la face extérieure de la paroi centrale 32 du profilé 28.

La bordure 21 du vitrage, muni du joint 22, est pincée entre la face extérieure de la couronne 30 et un profilé de retenue 34 sensiblement en forme de z. Ce profilé comprend une première aile 36 qui repose sur la couronne, une aile centrale 38 destinée à venir en appui sur la face rainurée 24 du joint et une aile terminale 40 destinée à remonter le long de l'aile 23 du joint 22. La première aile 36 ne recouvre que le bord extérieur de la face supérieure 42 de la couronne et laisse donc libre sur cette face une portée sur laquelle vient s'appuyer la partie débordante 21 du vitrage.

Le profilé de retenue 34 est muni d'un joint d'étanchéité annulaire 44 en élastomère pour assurer l'étanchéité du vitrage par rapport à la carrosserie du cockpit.

Le remplacement d'un vitrage se fait comme suit : on commence par assembler la couronne 30 et le profilé de retenue 34 au moyen d'une première série de boulons 46. Dans la feuillure formée entre la couronne et le profilé de retenue, on introduit la bordure 21 de vitrage munie du joint 22 et l'on serre les boulons 46. L'ensemble ainsi formé est fixé sur la face 32 du profilé 28 au moyen d'une deuxième série de boulons 48.

Il va de soi que la couronne 30 peut être formée en une seule pièce avec le profilé 28. Dans ce cas, le profilé de retenue 34 est fixé directement sur le profilé 28, seul le jeu de boulons 48 étant alors utilisé.

Tous les éléments décrits précédemment peuvent être présentés et vendus sous forme de kit, utilisable chaque fois que l'on veut remplacer un vitrage.

## Revendications

1. Kit pour le montage d'un vitrage feuilleté (10) sur un châssis (26) en forme de cadre de même surface que le vitrage coulissant dans une baie latérale (27) d'un cockpit d'avion (29), **caractérisé en ce qu'**il comporte :
• un vitrage feuilleté coulissant (10) constitué d'au moins deux feuilles de verre structurales (12, 14) liées entre elles par une couche intercalaire (16) en matière plastique transparente, la feuille de verre structurale (14) qui en usage est à l'extérieur par rapport à la cabine du cockpit étant recouverte d'une troisième feuille de verre (18) par l'intermédiaire d'une seconde couche intercalaire (20) en matière plastique, ladite troisième feuille de verre et ladite seconde couche intercalaire ayant des dimensions inférieures à celles des deux feuilles de verres structurales (12,14), de manière que celles-ci présentent une bordure périphérique (21) qui déborde par rapport à la troisième feuille de verre.
• un joint (22) en élastomère destiné à recouvrir le chant et le bord des feuilles de verre structurales (12,14) , et le chant de la troisième feuille (18), et de la couche intercalaire (20) par une aile (23) ;
• une couronne plate (30) en forme de cadre, de même surface que le châssis (26) et destinée à reposer sur une paroi d'appui (32) du châssis (26) ;
• un profilé de retenue (34) de même surface que le châssis (26) et sensiblement en forme de Z, ledit profilé étant pourvu d'une première aile (36) destinée à reposer sur la couronne (30) par son bord extérieur et laisser libre le bord intérieur, afin que ladite bordure (21) du vitrage puisse venir s'y appuyer, d'une seconde aile centrale (38) destiné à pincer ladite bordure périphérique (21) du vitrage contre la couronne (30) et d'une aile terminale (40) destinée à recouvrir l'aile (23) du joint ;
• une série de boulons (46) servant à fixer le profilé de retenue (34) sur la couronne (30) pour pincer ladite bordure (21) du vitrage :
• et une autre série de boulons (48) servant à fixer ensuite la couronne (30) sur le châssis .

2. Kit pour le montage d'un vitrage selon la revendication 1, **caractérisé en ce que** le joint (22) est pourvu sur au moins l'une de ses faces de nervures longitudinales (24) destinées à assurer un bon ancrage du joint dans la feuillure.

## Patentansprüche

1. Bausatz für die Montage einer Verbundverglasung (10) auf einem Gestell (26) in Form eines Rahmens mit der selben Fläche wie die verschiebbare Verglasung auf einem Seitenfenster (27) eines Flugzeug-Cockpits (29), **dadurch gekennzeichnet, dass** der Bausatz Folgendes aufweist:
eine verschiebbare Verbundverglasung (10), welche mindestens zwei strukturelle Glasscheiben (12, 14) aufweist, welche durch eine Trennschicht (16) aus transparentem Kunststoff voneinander getrennt sind, wobei die strukturelle Glasscheibe (14), die bei Gebrauch im Verhältnis zur Cockpitkabine außen angeordnet ist, von einer dritten Glasscheibe (18) mit Zwischenlage einer zweiten Trennschicht (20) aus Kunststoff bedeckt ist, wobei die dritte Glasscheibe und die zweite Trennschicht Abmessungen aufweisen, die kleiner als die der beiden strukturellen Glasscheiben (12, 14) sind, so dass diese eine Umfangskante (21) bilden, die im Vergleich zur dritten Glasscheibe hinausragt;
eine Elastomer-Dichtung, die zum Abdecken der Schmalseite und der Kante der strukturellen Glasscheiben (12, 14), sowie der Schmalseite der dritten Glasscheibe (18) und der Schmalseite der zweiten Trennschicht (20) mit einer Tragfläche (23) ausgelegt ist;
eine flache Einfassung (30) in Form eines Rahmens mit gleicher Fläche wie das Gestell (26) und derart ausgelegt, dass sie auf einer Stützwand (32) des Gestells (26) ruht;
ein Halteprofil (34) mit der selben Fläche wie das Gestell (26) und in etwa die Form eines Z aufweisend, wobei das Profil eine erste Tragfläche (36), die so ausgelegt ist, dass sie mit ihrer Außenkante auf der Einfassung (30) aufliegt und die Innenkante frei liegt, damit der Rand der Verglasung (21) sich dort abstützen kann, eine zweite zentrale Tragfläche (38), die so ausgelegt ist, dass sie die Umfangskante (21) der Verglasung gegen die Einfassung (30) presst, und eine Abschluss-Tragfläche (40) aufweist, die so ausgelegt ist, dass sie die Tragfläche (23) der Dichtung bedeckt;
eine Reihe von Bolzen (46), die zum Befestigen des Halteprofils (34) auf der Einfassung (30) zum Zusammenpressen des Rands (21) der Verglasung dienen; und
eine weitere Reihe von Bolzen (48), die zum anschließenden Befestigen der Einfassung (30) auf dem Gestell dienen.

2. Bausatz für die Montage einer Verglasung gemäß Anspruch 1, **dadurch gekennzeichnet, dass** die Dichtung (22) mindestens auf einer ihrer Seiten Längsrippen (24) aufweist, die eine gute Verankerung der Dichtung auf dem Falz gewährleisten sollen.

## Claims

1. A kit for installing a laminated glazing unit (10) in a sub-frame (26), in the form of framework having the same area as the glazing unit and sliding in a lateral opening (27) of an aircraft cockpit (29), **characterised in that** it comprises:
• a sliding laminated glazing unit (10) consisting of at least two structural sheets of glass (12,14) joined together by an intermediate layer (16) of transparent plastic material, the sheet of structural glass (14), which in use is on the outside in relation to the cockpit cab, being covered with a third sheet of glass (18) via a second intermediate layer (20) of plastic material, said third sheet of glass and said second intermediate layer being of dimensions which are smaller than those of the two structural sheets of glass (12,14) so that the latter have a peripheral edge (21) which overhangs in relation to the third sheet of glass;
• an elastomer seal (22) intended to cover the edge and the rim of the structural sheets of glass (12,14), and the edge of the third sheet (18), and of the intermediate layer (20) with a flange (23);
• a flat rim (30) in the form of a frame, having the same area as the sub-frame (26) and intended to rest on a support wall (32) of the sub-frame (26).
• a retaining sectional element (34) having the same area as the sub-frame (26) and substantially Z-shaped, said sectional element being provided with a first flange (36) intended to rest on the rim (30) with its outer edge and to leave free the inner edge so that said edge (21) of the glazing unit can bear against it, with a second central flange (38) intend to clamp said peripheral edge (21) against the rim (30) and an end flange (40) intended to cover the flange (23) of the seal;
• a set of bolts (46) serving to fasten the retaining sectional element to the rim (30) so as to clamp said rim (21) of the glazing unit;
• and another set of bolts (48) serving to fasten the rim (30) to the sub-frame.

2. A kit for installing a glazing unit according to claim 1, **characterised in that** the seal (22) is provided on at least one of its sides with longitudinal ribs (24) intended to ensure satisfactory anchoring of the seal in the rebate.
